# EUROPEAN PATENT APPLICATION

(11) **EP 2 887 722 A1**
(43) Date of publication of application: **24.06.2015**
(21) Application number: 12891427.2
(22) Date of filing: 30.11.2012
(51) Int. Cl.: H04W 16/14, H04W 72/08, H04W 84/12

(54) **COMMUNICATION DEVICE, COMMUNICATION CONTROL METHOD, DATABASE, AND DATABASE CONTROL METHOD**

(30) Priority: 17.08.2012 JP 2012181040
(71) Applicant: National Institute of Information and Communication Technology, Tokyo 184-8795 (JP)
(72) Inventor: ISHIZU, Kentaro, Koganei-shi Tokyo 184-8795 (JP); HARADA, Hiroshi, Koganei-shi Tokyo 184-8795 (JP)
(74) Representative: Granleese, Rhian Jane
(86) International application number: PCT/JP2012/007698
(87) International publication number: WO 2014/027385

(57) **Abstract**

A use frequency is advantageously selected even when moving. Region information indicating a planned moving range is retained and transmitted to a database, an available frequency information list indicating frequencies usable in common in an entire of the planned moving range is received from the database, and a use frequency is selected from the list. Information of frequencies usable in each of meshes divided from a geographical region is retained as mesh-classified available frequency information, a region information indicating a planned moving range is received from a communication device, examination regarding which meshes, out of the meshes, correspond to a region of the region information is conducted to specify meshes corresponding thereto as region-equivalent meshes, and based on the mesh-classified available frequency information, a list indicating frequencies usable in common in all of the region-equivalent meshes is generated as an available frequency information list and provided to the communication device.

## Description

### TECHNICAL FIELD

The present invention relates to a communication device being a terminal configured to operate under a television white space (TVWS) environment, a communication control method of the communication device, a database which provides information to the communication device, and a database control method, and particularly relates to a communication device used under the premise that it is moved, a communication control method of the communication device, a database which provides information to the communication device, and a database control method.

### BACKGROUND ART

Standards of wireless communication to use the same frequency band as that of a television broadcast being a licensed business and to be capable of being operated with no such a license, have been investigated. In these standards, a television broadcaster is a primary user, and only when the licensed frequency band of the primary user is not used, a secondary user is allowed to operate wireless communication in this frequency band (unused licensed frequency band = white space).

A communication device of the secondary user used under such the environment makes an inquiry about TV channels to, for example, a dedicated database so as to confirm that no TV signal exists. Specifically, as a typical operation, current positional information of the communication device is transmitted to the database, and a list of usable (available) frequencies at this position is obtained from the database. Subsequently, a frequency to be used is selected from the frequencies on the list, and an operation of wireless communication as the secondary user is carried out.

The frequency for the secondary user selected in the above-described manner is based only on the current position at the time of making the inquiry to the database, and when the communication device of the secondary user is moved, the frequency does not always become a frequency which can be used in an area in a destination of the movement. In such a case, it becomes necessary to switch the frequency to be used during the movement through an interaction with the database, and as the number of times of switching is increased, it becomes disadvantageous when stably operating the communication.

### PRIOR ART DOCUMENT

### NON-PATENT DOCUMENT

Non-patent Document 1: IEEE802.11af Task Group, http://mentor.ieee.org/802.11/
Non-patent Document 2: IEEE802.22 Working Group, http://menter.ieee.org/22/
Non-patent Document 3: IEEE802.19.1 Task Group, http://mentor.ieee.org/802.802.19/documents
Non-patent Document 4: Federal Communications Commission, Unlicensed Operation in the TV Broadcast Bands, Second Memorandum Opinion and Order, FCC, 10-17-4, Sept. 23, 2010.
Non-patent Document 5: Ofcom, Digital Dividend: Cognitive Access, Consultation on License Exempting Cognitive Devices using Interleaved Spectrum, July 2009.

### SUMMARY OF THE INVENTION

### PROBLEMS TO BE SOLVED BY THE INVENTION

The present invention has an object to provide, in a communication device being a terminal configured to operate under a television white space environment, a communication control method of the communication device, a database which provides information to the communication device, and a database control method, a communication device capable of selecting a use frequency in an advantageous manner even when it is moved, a communication control method of the communication device, a database which provides information to the communication device, and a database control method.

### MEANS FOR SOLVING THE PROBLEMS

In order to solve the above problems, a communication device as one aspect of the present invention is a communication device having a communication function unit, the communication device including: a storing unit configured to store and retain region information indicating a range of movement planned for own device; a transmitting unit configured to transmit the region information to a database; a receiving unit configured to receive an available frequency information list indicating frequencies usable in common in an entire range indicated by the region information, the available frequency information list being sent from the database as information in response to the region information; a selecting unit configured to select, from the available frequency information list, a frequency to be used as a use frequency; and a controlling unit configured to control the communication function unit to use the use frequency.

This communication device can store and retain the region information indicating the range of movement planned for the own device. Subsequently, the inquiry regarding an available frequency is made, by being accompanied with the region information, to the database, and from the database, the available frequency information list indicating the frequencies usable in common in the entire range indicated by the region information, is obtained. Accordingly, the frequency to be used can be selected from the available frequency information list. Specifically, since the inquiry accompanied with the region information indicating the range of movement planned for the own device is previously conducted so that it is possible to deal with the case where the communication device is moved, the use frequency selected as a result of the inquiry corresponds to a frequency which is available in the entire region in which the communication device is planned to be moved. Therefore, when the communication device is moved, a compulsory switching of the use frequency does not occur, resulting in that an advantageous selection of the use frequency is realized.

Further, a communication control method as another aspect of the present invention is a communication control method in a communication device having a communication function unit, the communication control method including: storing and retaining region information indicating a range of movement planned for own device; transmitting the region information to a database; receiving an available frequency information list indicating frequencies usable in common in an entire range indicated by the region information, the available frequency information list being sent from the database as information in response to the region information; selecting, from the available frequency information list, a frequency to be used as a use frequency; and controlling the communication function unit to use the use frequency.

This communication control method is a control method complying with the above-described communication device.

Further, a database as still another aspect of the present invention includes: a storing unit configured to store and retain information of frequencies usable in each of meshes obtained by dividing a geographical region under administrative control, as available frequency information classified by mesh; a receiving unit configured to receive, from a communication device, region information indicating a range of movement planned for the communication device; a specifying unit configured to specify, by examining, based on the region information, that which meshes out of the meshes correspond to a region indicated by the region information, meshes corresponding thereto as region-equivalent meshes; a generating unit configured to generate, based on the available frequency information classified by mesh, a list indicating frequencies usable in common in all of the region-equivalent meshes, as an available frequency information list; and a providing unit configured to provide the available frequency information list to the communication device.

This database is a database which provides the information regarding the available frequencies to the above-described communication device, and includes a configuration for generating the information of the available frequencies in response to the region information indicating the range of movement planned for the communication device. Specifically, the information of frequencies usable in each of the meshes obtained by dividing the geographical region under administrative control, is first stored and retained as the available frequency information classified by mesh. Subsequently, when the database receives, from the communication device, the region information indicating the range of movement planned for the communication device, it examines that which meshes correspond to the region indicated by the region information, and specifies the corresponding meshes as the region-equivalent meshes. Then, the database generates, based on the available frequency information classified by mesh, the list indicating the frequencies usable in common in all of the region-equivalent meshes, as the available frequency information list, and provides the list to the communication device.

An operation to be performed thereafter in the communication device is the same as that described above, and in the communication device, a compulsory switching of the use frequency does not occur when the communication device is moved, which realizes an advantageous selection of the use frequency.

Further, a database control method as yet another aspect of the present invention includes: storing and retaining information of frequencies usable in each of meshes obtained by dividing a geographical region under administrative control, as available frequency information classified by mesh; receiving, from a communication device, region information indicating a range of movement planned for the communication device;
specifying, by examining, based on the region information, that which meshes out of the meshes correspond to a region indicated by the region information, meshes corresponding thereto as region-equivalent meshes; generating, based on the available frequency information classified by mesh, a list indicating frequencies usable in common in all of the region-equivalent meshes, as an available frequency information list; and providing the available frequency information list to the communication device.

This database control method is a control method complying with the above-described database.

### EFFECT OF THE INVENTION

According to the present invention, it is possible to provide, in a communication device being a terminal configured to operate under a television white space environment, a communication control method of the communication device, a database which provides information to the communication device, and a database control method, a communication device capable of selecting a use frequency in an advantageous manner even when it is moved, a communication control method of the communication device, a database which provides information to the communication device, and a database control method.

### BRIEF DESCRIPTION OF THE DRAWINGS

FIG. 1 is a functional block diagram illustrating a configuration of a communication device being one embodiment of the present invention.
FIG. 2 is a functional block diagram illustrating a configuration of a database being one embodiment of the present invention.
FIG. 3 is an explanatory diagram exemplifying, in the communication device illustrated in FIG. 1, region information being a range of movement planned for the communication device.
FIG. 4 is an explanatory diagram for exemplifying a mode at a time of transferring the region information illustrated in FIG. 3 to the database.
FIG. 5 is an explanatory diagram exemplifying, in the database illustrated in FIG. 2, meshes obtained by dividing a geographical region under its administrative control, and meshes, out of the above, corresponding to a range indicated by the region information.
FIG. 6 is an explanatory diagram exemplifying, in the database illustrated in FIG. 2, available frequency information classified by mesh stored and retained in the database, a part of region-equivalent meshes out of the above, and frequencies usable in common in the region-equivalent meshes.

### MODES FOR CARRYING OUT THE INVENTION

As a mode of the communication device being the present invention, it is possible to design such that there is further provided a second storing unit configured to store and retain necessary bandwidth information indicating a frequency bandwidth necessary for communication to be performed, wherein: the necessary bandwidth information is transmitted to the database together with the region information; and the available frequency information list sent from the database is a list indicating frequencies securing the frequency bandwidth indicated by the necessary bandwidth information and usable in common in the entire range indicated by the region information.

This mode introduces a concept of the frequency bandwidth necessary for the communication to be performed. Generally, it can be considered that a bandwidth of communication is wide or narrow according to need. Accordingly, it is designed such that the list indicating frequencies usable in common is obtained from the database in accordance with a required bandwidth. This makes it possible to select, in accordance with a frequency bandwidth necessary for the communication to be executed, a use frequency in an advantageous manner even when the communication device is moved. Note that it is also possible to select, as another mode, a available frequency securing a frequency bandwidth which is necessary for the communication to be performed, by utilizing an available frequency information list obtained without sending necessary bandwidth information to the database. In this case, it becomes possible to select a use frequency by dealing with a case where a bandwidth necessary for the communication changes depending on a situation at that time.

Further, as a mode, it is possible to design such that further provided is an obtaining unit configured to obtain the region information from another device in order to store and retain the region information. In short, this enables to designate a planned moving range by using a navigation device, for example, and to select a frequency appropriate as the communication device in linkage with the planned moving range.

Further, as a mode, it is possible to design such that further provided is an inputting unit configured to input the region information in order to store and retain the region information. This includes an input unit (user interface) by which a user can manually input region information. Various interfaces can be utilized for convenience of input.

Further, as a mode, it is possible to design such that further provided is a generating unit configured to generate the necessary bandwidth information based on a property of information processing which becomes necessary for the communication, in order to store and retain the necessary bandwidth information. This is for trying to automatically generate necessary bandwidth information based on a characteristic and the like of information processing being necessary for the communication. In reality, for example, the necessary bandwidth information can be previously set by a classification, a data amount and the like of application which is responsible for the information processing.

Further, as a mode, it is possible to design such that the region information is any one of first-type information being information indicating a polygonal region formed by connecting a plurality of geographical positions represented by latitudes and longitudes, second-type information being information indicating a circular region with a predetermined radius in which a geographical position represented by a latitude and a longitude is set as a center, third-type information being information indicating a region specified by an administrative division or a name of town, and information as a result of combining and adding one or more of information out of the first-type information, the second-type information, and the third-type information. These are concrete examples of contents of region information which can be considered to be easily treated by a user.

Further, as a mode of the database being the present invention, it is possible to design such that together with the region information received is necessary bandwidth information indicating a frequency bandwidth necessary for the communication to be performed by the communication device, and the available frequency information list is a list indicating frequencies securing the frequency bandwidth indicated by the necessary bandwidth information and usable in common in all of the region-equivalent meshes. This mode corresponds to a configuration on the database side when a concept of frequency bandwidth necessary for the communication to be performed is introduced. In this case, as elements of the available frequency information list, frequencies securing the frequency bandwidth indicated by the necessary bandwidth information and usable in common in all of the region-equivalent meshes are cited.

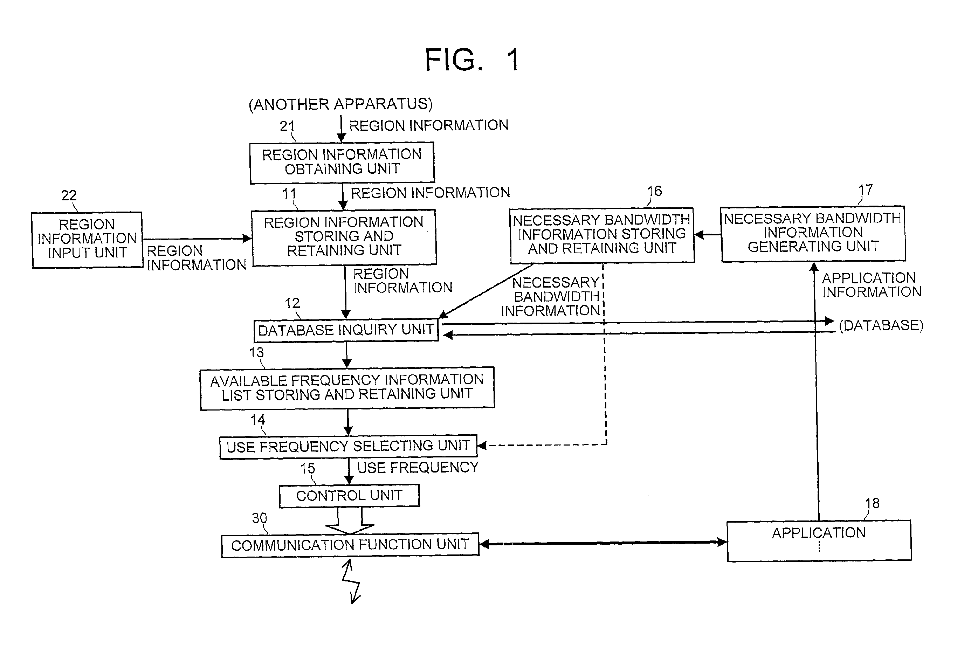

Based on the above, embodiments of the present invention will be described hereinafter with reference to the drawings. FIG. 1 is a functional block diagram illustrating a configuration of a communication device being one embodiment of the present invention. As illustrated in FIG. 1, this communication device has a region information storing and retaining unit 11, a database inquiry unit 12, an available frequency information list storing and retaining unit 13, a use frequency selecting unit 14, a control unit 15, a necessary bandwidth information storing and retaining unit 16, a necessary bandwidth information generating unit 17, applications 18, a region information obtaining unit 21, a region information input unit 22, and a communication function unit 30.

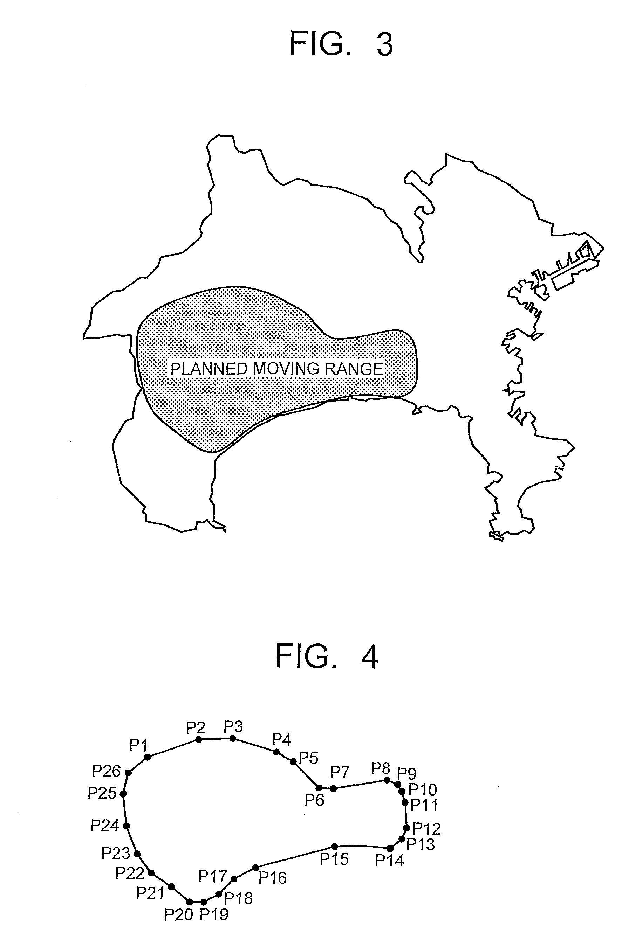

FIG. 1 illustrates a functional block diagram, and, when an operation of each configuration in this diagram is described below, FIG. 3 and FIG. 4 are referred to as appropriate. Note that description is made hereinafter by setting that the communication device is a mobile terminal, but, the following description is nearly satisfied even if the communication device is a mobile base station.

The region information storing and retaining unit 11 is for storing and retaining region information indicating a range of movement planned for the device. In order to make the storing and retaining unit 11 store and retain such region information, the communication device has the region information obtaining unit 21, and the region information input unit 22. The region information stored and retained in the region information storing and retaining unit 11 is passed to the database inquiry unit 12.

The region information obtaining unit 21 is an interface for obtaining the region information from another device or apparatus for the purpose of making the region information storing and retaining unit 11 store and retain the region information. Examples of the other device or apparatus are a navigation system (especially a car navigation system), a smartphone provided with a map application, and so on. When the region information obtaining unit 21 is used, the user can easily obtain the region information created by using the other device or apparatus as described above. The obtained region information is passed to the region information storing and retaining unit 11, and stored and retained in the unit.

The region information input unit 22 is an input unit (user interface) including a map screen, for example, which is provided so that the user can manually input region information. Various interfaces can be utilized for convenience of input. The region information input by the user is passed to the region information storing and retaining unit 11, and stored and retained in the unit.

FIG. 3 is an explanatory diagram exemplifying, in the communication device illustrated in FIG. 1, region information being a range of movement planned for the communication device. In both of a case where the region information is obtained by using the region information obtaining unit 21, and a case where the region information is input by using the region information input unit 22, a map input screen (Kanagawa prefecture, in this example) as illustrated in FIG. 3 is displayed on another device or the own device. Therefore, the user uses the screen, and inputs a planned moving range as illustrated in the drawing, for example, on the screen as a geographical range.

The range input on the screen is converted, by the other device or the region information input unit 22, into information indicating a polygonal region formed by connecting a plurality of geographical positions represented by latitudes and longitudes, for example. More concretely, this means that, when the input is made on the map as illustrated in FIG. 3, the planned moving range is approximated by a polygon specified by geographical positions P1 to P26, as illustrated in FIG. 4, and information indicating latitudes and longitudes of P1 to P26 is generated.

Note that various modified examples regarding the input method of the region information and the specification method of the region can be considered, which will be described later. Depending on cases, it can be considered that only one of the region information obtaining unit 21 and the region information input unit 22 is mounted, or the units are provided in a detachable manner.

The applications 18 correspond to various types of application programs included in this communication device. As a function of the application 18, for example, a file transfer, a mail transmission/reception, a voice call, a video information transmission/reception and the like can be exemplified. According to need, the applications 18 transmit/receive data to/from an outside through a communication with the use of the communication function unit 30. Further, the applications 18 transmit various types of information based on their functions to the necessary bandwidth information generating unit 17. The various types of information are not particularly limited as long as they are pieces of information which can contribute to determine a frequency bandwidth necessary for the communication to be performed by this communication device (communication performed by the communication function unit 30).

Based on the information transmitted by the applications 18, the necessary bandwidth information generating unit 17 determines and generates the frequency; bandwidth necessary for the communication to be performed by this communication device, as necessary bandwidth information. This is for automatically generating the necessary bandwidth information based on a characteristic and the like of information processing being necessary for the communication. In reality, for example, the necessary bandwidth information can be previously set by a classification, a data amount and the like of applications 18 which are responsible for the information processing. The generated information is passed to the necessary bandwidth information storing and retaining unit 16. The necessary bandwidth information storing and retaining unit 16 stores and retains the necessary bandwidth information passed by the information generating unit 17, and at the same time, it passes the necessary bandwidth information to the database inquiry unit 12.

The database inquiry unit 12 transmits the region information passed by the region information storing and retaining unit 11 and the necessary bandwidth information passed by the necessary bandwidth information storing and retaining unit 16, to the database, and makes an inquiry to the database regarding an available frequency (in addition to that, various use regulations besides maximum transmission power thereof).

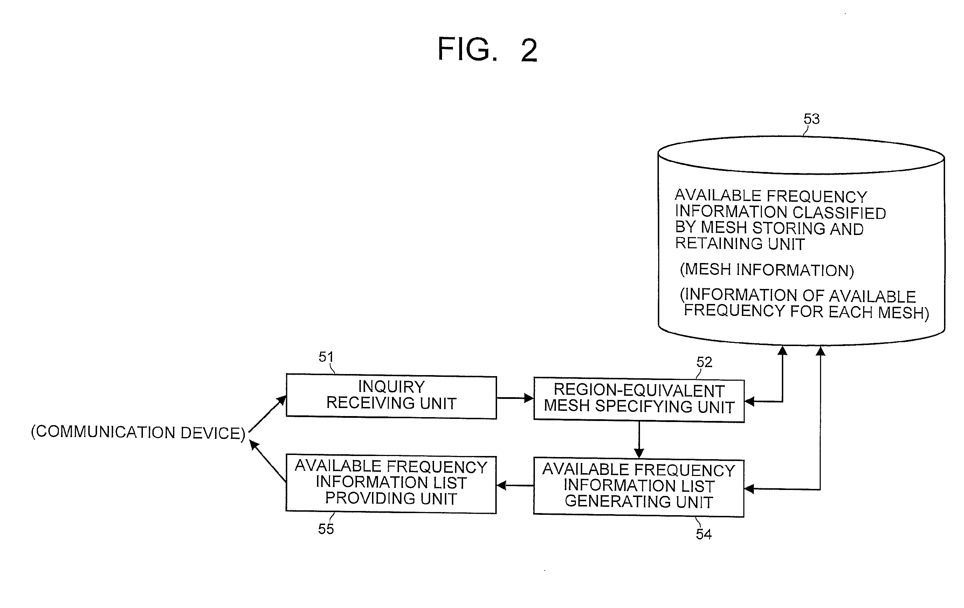

The database mentioned here corresponds to a server provided on the Internet designed to provide, to a communication device (secondary user) capable of being operated under the TVWS environment, at least information regarding a frequency which can be used without exerting an influence on a primary user. An operation of the database will be explained again while preferring to FIG. 2, so that here, description will be made below by assuming that an available frequency information list in which frequencies securing the frequency bandwidth indicated by the above-described necessary bandwidth information and usable in common in the entire range indicated by the region information described above are listed, is sent from the database in response to the above-described inquiry.

The available frequency information list sent from the database is received by the database inquiry unit 12, and further, the list is passed to the available frequency information list storing and retaining unit 13, and stored and retained in the unit. The available frequency information list stored and retained in the storing and retaining unit 13 is further passed to the use frequency selecting unit 14.

The use frequency selecting unit 14 selects, from the frequencies listed on the available frequency information list passed by the available frequency information list storing and retaining unit 13, a frequency to be used as a use frequency. Regarding which frequency is to be selected specifically, for example, based on the "various use regulations besides maximum transmission power" described above, a selection can be made by adding a view point that the operation becomes more advantageous. Information of the selected use frequency is passed to the control unit 15.

The control unit 15 controls the communication function unit 30 based on the information of the use frequency passed by the use frequency selecting unit 14. Specifically, the communication function unit 30 performs wireless transmission/reception using this use frequency. The communication function unit 30 is a functional unit responsible for the ordinary communication function.

As above, the configuration and basic operations of the communication device being one embodiment have been described. With the use of this communication device, it is possible to store and retain the region information indicating the range of movement planned for the own device. Subsequently, the inquiry regarding the available frequency is made to the database by being accompanied with the region information, and from the database, the available frequency information list indicating the frequencies usable in common in the entire range indicated by the region information is obtained. Accordingly, it is possible to select the frequency to be used from the available frequency information list.

Specifically, since the inquiry accompanied with the region information indicating the range of movement planned for the own device is previously conducted so as to be capable of dealing with the case where the communication device is moved, the use frequency being a selected result is a frequency which is available in the entire region in which the communication device is planned to be moved. Therefore, when the communication device is moved, a compulsory switching of the use frequency does not occur, resulting in that an advantageous selection of the use frequency is realized.

Further, it can be generally considered that a bandwidth of communication is wide or narrow according to need, and in accordance with that, it is designed such that the list indicating frequencies securing a necessary bandwidth and usable in common is obtained from the database. Therefore, it is possible to select, in accordance with the frequency bandwidth which is necessary for the communication to be executed, a use frequency in an advantageous manner when the communication device is moved.

Further, for the purpose of storing and retaining the region information, the region information obtaining unit 21 obtaining the region information from another device is provided, and it is possible to designate a planned moving range by using a navigation device, for example, and to select a frequency appropriate as the communication device in linkage with the planned moving range.

Note that various modified examples regarding the input method of the region information and the specification method of the region can be considered. In the above description, the region information is set to be (1) the information indicating the polygonal region formed by connecting the plurality of geographical positions represented by the latitudes and the longitudes, but, instead of this, it can also be considered that the region information is set to be (2) information indicating a circular region with a predetermined radius in which a geographical position represented by a latitude and a longitude is set as a center, or (3) information indicating a region specified by an administrative division or a name of town. In addition to that, it is also possible to set the region information to (4) information as a result of combining and adding one or more of information out of these pieces of information.

Regarding the information (1), an input of numerical values of the latitudes and the longitudes is also possible in theory, but, practically, it can be considered that the designation of region on the display of map is required. The information (2) is suited for being obtained by designating the region on the display of map, but, since it is only required to designate an initial position and a radius, it can also be considered to be practical to specify the initial position by GPS (not-illustrated) and then input a numerical value of the radius. If only such an input of the numerical value is required, an information processing burden as an interface becomes very small. It can be considered that it is easy for the user to input the information (3). Practically, it can be considered that the side of the communication device is required to have a burden of processing at the time of converting the region specified by the administrative division or the name of town into a polygonal region obtained by connecting geographical positions represented by latitudes and longitudes.

Next, FIG. 2 is a functional block diagram illustrating a configuration of a database being one embodiment of the present invention. This database corresponds to "database" illustrated in FIG. 1, and it has, as components, an inquiry receiving unit 51, a region-equivalent mesh specifying unit 52, an available frequency information classified by mesh storing and retaining unit 53, an available frequency information list generating unit 54, and an available frequency information list providing unit 55.

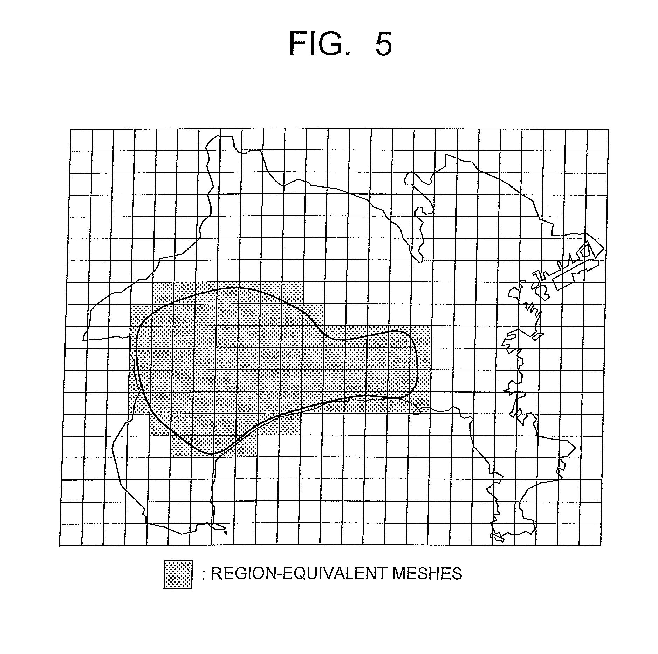

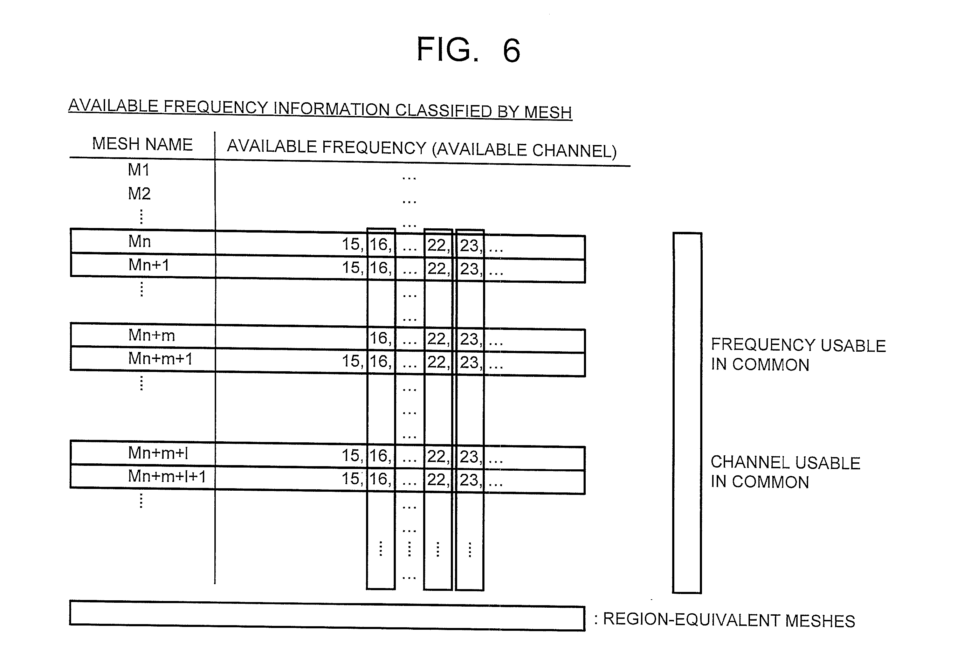

FIG. 2 illustrates a functional block diagram, and, when an operation of each configuration in this diagram is described below, FIG. 5 and FIG. 6 are referred to as appropriate.

The inquiry receiving unit 51 receives, from the communication device, an inquiry regarding an available frequency (in addition to that, various use regulations besides maximum transmission power thereof). This inquiry is accompanied with the already-described "region information" and "necessary bandwidth information". The inquiry received by the inquiry receiving unit 51 is passed to the region-equivalent mesh specifying unit 52.

The region-equivalent mesh specifying unit 52 compares the region information included in the inquiry passed by the inquiry receiving unit 51 and the information of meshes obtained by dividing the geographical region controlled by the database, stored and retained in the available frequency information classified by mesh storing and retaining unit 53. Then, it is examined that which meshes corresponds to the region indicated by the region information, and the corresponding meshes are specified as region-equivalent meshes. Information of the specified region-equivalent meshes is passed to the available frequency information list generating unit 54.

This function of the region-equivalent mesh specifying unit 52 is as follows when being concretely described and exemplified with reference to FIG. 5. The available frequency information classified by mesh storing and retaining unit 53 retains the information of meshes obtained by dividing the geographical region controlled by the database. In the case of FIG. 5, each mesh has a predetermined rectangular shape as illustrated in the drawing. Any position included in the geographical region under control belongs to any mesh.

Then, as illustrated in the drawing, the region-equivalent mesh specifying unit 52 specifies meshes including the range indicated by the region information, as region-equivalent meshes. Specifically, it is determined that a mesh which includes even a part of the range indicated by the region information is incorporated as the region-equivalent meshes, with a margin, on the premise that the communication device performs the communication therein.

The available frequency information list generating unit 54 generates, based on the available frequency information classified by mesh stored and retained by the available frequency information classified by mesh storing and retaining unit 53, a list indicating frequencies securing the frequency bandwidth indicated by the necessary bandwidth information and usable in common in all of the region-equivalent meshes described above, as the available frequency information list. Here, the "necessary bandwidth information" is information accompanied with the inquiry from the communication device. The generated available frequency information list is passed to the available frequency information list providing unit 55.

This function of the available frequency information list generating unit 54 is as follows when being concretely described with reference to FIG. 6. FIG. 6 indicates the available frequency information classified by mesh stored and retained by the available frequency information classified by mesh storing and retaining unit 53. The available frequency information classified by mesh is information indicating frequencies usable (available) in each of meshes obtained by dividing the geographical region controlled by the database. The list is created in which meshes are named as M1, M2, ···, as mesh names, and available frequencies (available channels, in this case) with respect to each of the meshes are indicated (note that practically, various use regulations besides maximum transmission power of the frequencies are also indicated, but, they are omitted for the convenience of explanation).

Accordingly, the available frequency information list generating unit 54 refers to a part of the region-equivalent meshes from the list, and extracts and specifies, out of the available channels indicated with respect to those region-equivalent meshes, channels which appear in common in all of the region-equivalent meshes. A result thereof becomes channels 16,22, and 23 in the case as illustrated in FIG. 6. Here, in the actual specification, the specification is conducted so as to comply with the above-described "necessary bandwidth information". Specifically, if a bandwidth of one channel is assumed to be 6 MHz, when the information indicated by the "necessary bandwidth information" is 6 MHz or less, the available frequency information list is generated in which the available channels are set to three channels of 16, 22, and 23.

On the other hand, when the information indicated by the "necessary bandwidth information" is more than 6 MHz and equal to or less than 12 MHz, the available frequency information list is generated in which the available channels are a series of two channels of 22 and 23 (since the channel 16 cannot be used in this case). Further, when the information indicated by the "necessary bandwidth information" exceeds 12 MHz, the available frequency information list is generated in which it is set that no channel exists as the available channel (since both of the channels 22 and 23 cannot be used in this case).

The available frequency information list providing unit 55 provides the available frequency information list passed by the available frequency information generating unit 54, to the communication device which made the inquiry.

As above, the configuration and basic operations of the database being one embodiment have been described. With the use of this database, it is possible to provide, at the time of providing the information regarding the available frequencies to the communication device illustrated in FIG. 1, the information of the available frequencies in response to the region information indicating the range of movement planned for the communication device.

Specifically, the information of frequencies usable in each of the meshes obtained by dividing the geographical region under administrative control, is first stored and retained as the available frequency information classified by mesh. Subsequently, when the database receives, from the communication device, the region information indicating the range of movement planned for the communication device, it examines that which meshes correspond to the region indicated by the region information, and specifies the corresponding meshes as the region-equivalent meshes. Then, the database can generated, based on the available frequency information classified by mesh, the list indicating the frequencies securing the frequency bandwidth indicated by the necessary bandwidth information and usable in common in all of the region-equivalent meshes, as the available frequency information list, so that it can provide the list to the communication device.

Note that the available frequency information classified by mesh storing and retaining unit 53 does not always have to prepare the meshes as fixed meshes. For example, it is also possible to dynamically vary a size of the mesh. In this case, it is set such that in accordance with the variation of the mesh, the available frequency information corresponding to the mesh is determined again, and the information is retained again as available frequency information classified by mesh. This is to take a competition state between the operation of primary user and the operation of secondary user into consideration, and to provide detailed available frequency information by setting the meshes to coarse meshes when the competition is not increased too much, and by setting the meshes to fine meshes as the competition is increased.

Further, the available frequency information classified by mesh storing and retaining unit 53 does not always have to previously calculate and retain all of the pieces of available frequency information classified by mesh. Specifically, it is also possible that the available frequency information classified by mesh storing and retaining unit 53 operates to specify region-equivalent meshes each time an inquiry is made from the communication device, for example, to determine an available frequency with respect to each of the region-equivalent meshes, and to store and retain the available frequencies. In this case, the available frequency determined once can also be accumulated as a part of the available frequency information classified by mesh, and utilized at a time of an inquiry thereafter.

Next, modified examples of the above-described communication device and database will be described in a supplemental manner. In the above-described explanation, it is set that the "necessary bandwidth information" from the communication device side is accompanied with the inquiry to the database. On the contrary, even if it is set that the necessary bandwidth information is not accompanied with the inquiry to the database, an effective configuration is provided.

Specifically, in this case, there is no need to pass the necessary bandwidth information from the necessary bandwidth information storing and retaining unit 16 to the database inquiry unit 12 in FIG. 1. Therefore, since the necessary bandwidth information is not included in the inquiry from the database inquiry unit 12, the available frequency information list generated through the operation in the database simply becomes one which indicates channels usable in common in all of the region-equivalent meshes regardless of whether or not the frequency bandwidth indicated by the necessary bandwidth information is secured. In the example illustrated in FIG. 6, the list indicating channels 16, 22, and 23 is sent as a reply.

Accordingly, by using, at the time of the selection in the use frequency selecting unit 14, information retained in the necessary bandwidth information retaining unit 16 (refer to a dotted line in FIG. 1), the side of the communication device can select a channel capable of securing a frequency bandwidth indicated by the necessary bandwidth information. Specifically, in this case, it is possible to select a use frequency by dealing with a case where the bandwidth necessary for the communication changes depending on a situation at that time.

Hereinabove, while certain embodiments have been described, these embodiments have been presented by way of example only, and are not intended to limit the scope of the inventions. Indeed, the novel embodiment described herein may be embodiment in a variety of other forms; furthermore, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A communication device having a communication function unit, the communication device comprising:
a storing unit configured to store and retain region information indicating a range of movement planned for own device;
a transmitting unit configured to transmit the region information to a database;
a receiving unit configured to receive an available frequency information list indicating frequencies usable in common in an entire range indicated by the region information, the available frequency information list being sent from the database as information in response to the region information;
a selecting unit configured to select, from the available frequency information list, a frequency to be used as a use frequency; and
a controlling unit configured to control the communication function unit to use the use frequency.

2. The communication device according to claim 1, further comprising
a second storing unit configured to store and retain necessary bandwidth information indicating a frequency bandwidth necessary for communication to be performed, wherein:
the necessary bandwidth information is transmitted to the database together with the region information; and
the available frequency information list sent from the database is a list indicating frequencies securing the frequency bandwidth indicated by the necessary bandwidth information and usable in common in the entire range indicated by the region information.

3. The communication device according to claim 1, further comprising
an obtaining unit configured to obtain the region information from another device in order to store and retain the region information.

4. The communication device according to claim 1, further comprising
an inputting unit configured to input the region information in order to store and retain the region information.

5. The communication device according to claim 2, further comprising
a generating unit configured to generate the necessary bandwidth information based on a property of information processing which becomes necessary for the communication, in order to store and retain the necessary bandwidth information.

6. The communication device according to claim 1,
wherein the region information is any one of first-type information being information indicating a polygonal region formed by connecting a plurality of geographical positions represented by latitudes and longitudes, second-type information being information indicating a circular region with a predetermined radius in which a geographical position represented by a latitude and a longitude is set as a center, third-type information being information indicating a region specified by an administrative division or a name of town, and information as a result of combining and adding one or more of information out of the first-type information, the second-type information, and the third-type information.

7. A communication control method in a communication device having a communication function unit, the communication control method comprising:
storing and retaining region information indicating a range of movement planned for own device;
transmitting the region information to a database;
receiving an available frequency information list indicating frequencies usable in common in an entire range indicated by the region information, the available frequency information list being sent from the database as information in response to the region information;
selecting, from the available frequency information list, a frequency to be used as a use frequency; and
controlling the communication function unit to use the use frequency.

8. A database, comprising:
a storing unit configured to store and retain information of frequencies usable in each of meshes obtained by dividing a geographical region under administrative control, as available frequency information classified by mesh;
a receiving unit configured to receive, from a communication device, region information indicating a range of movement planned for the communication device;
a specifying unit configured to specify, by examining, based on the region information, that which meshes out of the meshes correspond to a region indicated by the region information, meshes corresponding thereto as region-equivalent meshes;
a generating unit configured to generate, based on the available frequency information classified by mesh, a list indicating frequencies usable in common in all of the region-equivalent meshes, as an available frequency information list; and
a providing unit configured to provide the available frequency information list to the communication device.

9. The database according to claim 8,
wherein together with the region information received is necessary bandwidth information indicating a frequency bandwidth necessary for the communication to be performed by the communication device; and
wherein the available frequency information list is a list indicating frequencies securing the frequency bandwidth indicated by the necessary bandwidth information and usable in common in all of the region-equivalent meshes.

10. A database control method, comprising:
storing and retaining information of frequencies usable in each of meshes obtained by dividing a geographical region under administrative control, as available frequency information classified by mesh;
receiving, from a communication device, region information indicating a range of movement planned for the communication device;
specifying, by examining, based on the region information, that which meshes out of the meshes correspond to a region indicated by the region information, meshes corresponding thereto as region-equivalent meshes;
generating, based on the available frequency information classified by mesh, a list indicating frequencies usable in common in all of the region-equivalent meshes, as an available frequency information list; and
providing the available frequency information list to the communication device.
